# EUROPEAN PATENT APPLICATION

(11) **EP 3 316 545 A1**
(43) Date of publication of application: **02.05.2018**
(21) Application number: 17188483.6
(22) Date of filing: 30.08.2017
(51) Int. Cl.: H04L 29/06

(54) **FORWARDING SERVICE REQUESTS FROM OUTBOUND PROXY SERVERS TO REMOTE SERVERS INSIDE OF FIREWALLS**

(30) Priority: 28.10.2016 IN 201641037160
(71) Applicant: Entit Software LLC, Sunnyvale, CA 94089 (US)
(72) Inventor: KAUL, Vimal, 560 093 Bangalore (IN); VOSSELER, Frank, 71034 Boeblingen (DE); PONNUSAMY, Arivazhagan, 560 093 Bangalore (IN)
(74) Representative: HGF Limited

(57) **Abstract**

In some examples an Outbound Proxy Server (OPS) of a server internal to a firewall receives an inbound service request for a particular service from a Reverse Channel Proxy (RCP) server external to the firewall through an outbound connection across the firewall. The particular service is internal to the firewall. The firewall is to enable entities internal to the firewall to originate connections across the firewall to entities external to the firewall and to block connections originating from entities external to the firewall. The OPS creates a connection for sending data to a corresponding remote server internal to the firewall storing the particular service. The OPS also forwards the inbound service request to the particular service through the created connection.

## Description

### BACKGROUND

Organizations are tightening their IT security and the firewall rules are becoming stricter so users, such as organizations, enterprises, etc., are restricting their communications in their network environments to outbound communications by using firewalls that allow the outbound network connections but block any inbound network connection. Firewalls are commonly used to separate a network on an internal side of the firewall from a Demilitarized Zone (DMZ) and a network on an external side of the firewall. All connections running on two sides of the firewall are outbound. However, there may be situations where applications running external to the firewall may need to inbound communicate with applications running internal to the firewall.

### BRIEF DESCRIPTION OF THE DRAWINGS

The following detailed description references the drawings, wherein:
Fig. 1 shows a block diagram of an example system for forwarding inbound service requests from an outbound proxy server to a remote server internal to the firewall.
Fig. 2 shows a flowchart of an example method for forwarding an inbound service request from an outbound proxy server (OPS) to a remote server internal to the firewall.
Fig. 3 shows a flowchart of another example method for forwarding an inbound service request from an outbound proxy server to a remote server internal to the firewall, including configuring the OPS.
Fig. 4 shows a block diagram of an example system for forwarding inbound service requests from an OPS of a server internal to the firewall to a remote server storing the requested service inside the firewall.

### DETAILED DESCRIPTION

For purposes of security and system integrity, many users, companies or organizations install firewalls in their computing devices that restrict the exchange of information with computing devices outside of the local network. A firewall can be interposed between a local computer system and the Internet to block undesired incoming requests and information. Consequently a local computer system that can be protected by a firewall may not be unconditionally accessed from an external and remote location.

Some "Software as a Service" (SaaS) solutions may involve linking of applications running on systems across the internet. The web traffic may be channeled through proxy servers which are suitable for outbound connections. However, in some examples, these proxy servers may not provide the facility to make incoming connections from a trusted source for the outbound environments. To facilitate incoming requests, enterprises may create a DMZ on which they can receive the incoming request which can be further validated and routed to the secured zone. Firewalls may handle this by opening involved ports, something which corporate security standards may not allow as it lowers the security of the company's network perimeter. Without this reconfiguration, inbound connections to the proxy may not be possible.

In other examples, solutions like Reverse Channel Proxy (RCP) server may be used. In the RCP approach, an RCP client ("Request Broker") located in a server (target server) internal to the firewall opens a long-lasting network connection (tunnel) to a remote RCP server located external to the firewall. Users, for example clients, applications, etc. can send requests to the RCP server for a target service, which forwards them through its tunnel to the Request Broker on the target server, which brokers the request to the target service that is registered with the Request Broker on this target server. This may solve the network connectivity issue, but has scaling issues, as each target server creates an independent communication channel to the RCP server which will run into system resource constraints with an increasing number of target servers. Moreover, this solution implies opening ports of the firewall to allow the creation of the tunnels for allowing the communication through the firewall, so an increasing number of target servers may involve increasing the number of opened ports in the firewall which may seriously compromise network security.

Having outbound environments with the ability of receiving inbound communication may be useful as data centers are moving to the cloud and applications are provided as SaaS solutions, creating the need to connect applications deployed in outbound environments. Thus, it may be useful to provide an approach to achieve network connectivity to end-points so that servers inside the firewall may be able to accept incoming requests in an outbound environment while reducing the connections created across the firewall to a minimum number.

Examples herein described relate to an Outbound Proxy Server (OPS) located in a server internal to the firewall that forwards incoming server requests, received from Reverse Channel Proxy servers external to the firewall, by creating a connection with a corresponding remote server storing the requested service. The remote servers are also located internal to the firewall.

The OPS may get the incoming service request to the requested service inside the firewall, while the user who sends the request does not need to know where the service is located or the particular OPS to which the request is to be sent. By adding proxy abilities to the OPS, the OPS can send proxy requests (received from outside the firewall) to request brokers at remote servers inside the firewall. This greatly decreases the number of servers internal to the firewall that need to be equipped with a request broker that needs to communicate with the RCP server outside the firewall, thus, reducing the number of opened ports in the firewall and then, significantly increasing network security.

In some examples, each remote server may host a request broker that is to receive the incoming service requests from the OPS and to locally manage the received requests by forwarding them to the targeted service among the services hosted in the server and previously registered into the respective request broker. Thus, the services hosted in a particular remote server may be locally registered up-front in the request broker of the remote server. In some other examples, the servers hosting the OPS(s) may also host services, and the services may be locally registered up-front in the respective OPS(s). This greatly increases security since only services registered with a request broker can be reached though the outbound connection, and not any arbitrary, non-registered service inside the firewall.

In some examples, the OPS of a server internal to a firewall receives an incoming service request for a particular service from a Reverse Channel Proxy (RCP) server external to the firewall. The incoming service request may be received through an outbound connection across the firewall previously created by the OPS with the RCP server. The firewall enables entities internal to the firewall to originate connections across the firewall to entities external to the firewall and blocks connections originating from entities external to the firewall. The incoming service request may be intended for a service in a server located inside the firewall. The requested service may be located in a remote server that cannot be reached directly through the outbound connection between the OPS(s) and the RCP server(s). In such examples, the OPS may create a connection for sending data to a corresponding remote server internal to the firewall storing the particular service and may forward the incoming service request to the particular service through the created connection. In some other examples, the requested service may be stored in the server storing the OPS so, the requested service may be reached directly through the outbound connection between the OPS(s) and the RCP server (s).

In some other examples, the RCP server, in response to a reception of an incoming service request from a user determines the OPS that is responsible for the requested service and then sends the incoming service request to that particular OPS among the different OPSs to which the RCP server may be connected through different outbound connections. In such examples, the incoming service request may comprise a "server:port" identifier and a service name.

In some other examples, the RCP server may be configured with mapping rules of IP-range pattern, Fully Qualified Domain Name (FQDN) server name pattern, or server list, such that the RCP server can determine the OPS responsible for the requested service, and thus the outbound connection to be used for forwarding the incoming service request, based on the mapping rules of IP-range pattern, the FQDM server name pattern or the server list. The OPS may forward the request to the remote server specified in the request by the "server:port" identifier and the request broker of the remote server may then look for a locally registered service according to the service name specified in the request.

As defined herein, target rules are pre-defined rules that determine the OPS that is to be used to forward the incoming service request to the remote servers. Based on these target rules, the RCP server may determine to which OPS forwards the incoming service request.

A particular example of target rules may be "ops1.example.com: 443 +(16*) - (16.200.*); ops2.example.com: 443 +(*.example.com) -(notthisserver.example.com)". This example target rule specifies that the OPS named as "ops1.example.com" is to be used for any remote server with an IP address of "16.*" but not "16.200.*" and that the port to be used to create the connection with the request brokers of the remote servers is port 443. The example target rule also specifies that OPS named as "ops2.example.com" is to be used for any remote server with a FQDN of "*.example.com" but not "notthisserver.example.com" and that the port to be used to create the connection with the request brokers of the remote servers is port 443. For example, if the incoming service request comprises a request for a server with an IP address "16.123.1.1" and based on this example target rule, the RCP server will forward the incoming service request to "ops1.example.com".

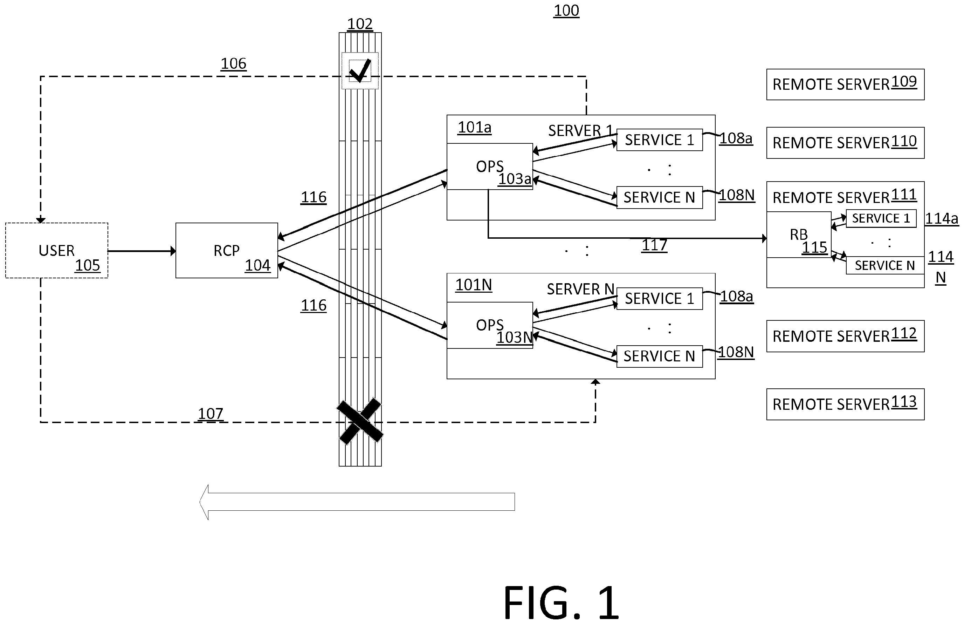

Referring now to the drawings, FIG. 1 shows a block diagram of an example system 100 for forwarding inbound service requests from an outbound proxy server to a remote server internal to the firewall. The system depicted in FIG. 1 may include additional components, and some of the components described herein may be removed or modified without departing from a scope of the system 100. This example does not intend to be limiting.

The system 100 comprises a plurality of servers 101a-101N, in which N represents an integer value greater than one, internal to a firewall 102, wherein each server 101 a-1 01 N stores an OPS 103a-103N. The firewall 102 enables entities internal to the firewall 102, for example the server 101 a, to originate connections 106 across the firewall 102 to entities, for example computing devices, servers, etc., external to the firewall 102 and to block connections 107 originating from entities external to the firewall 102. In some examples, the plurality of servers 101 a-1 01 N may comprise a plurality of registered services 108a-108N, in which N represents an integer value greater than one, such as alert generator service, metrics collection service, etc.

The system 100 also comprises a plurality of remote servers 109-113 located inside the firewall 102. FIG. 1 shows 5 remote servers for clarity reasons although there may be any number of remote servers inside the firewall. Each one of the remote servers 109-113 stores a plurality of registered services 114a-114N, in which N represents an integer value greater than one, and a request broker 115. The plurality of services 114a-registered services 114a-114N are registered in the request broker 115. For example, the registered services may be an alert generator service, metrics collection service, etc.

In such examples, the system 100 comprises a RCP server 104 external to the firewall 102 that is connected to all of the OPS(s) 103a-103N in the system through an outbound connection(s) 116, also named as reverse channel, which allows a bidirectional communication between the RCP server 104 and the OPS(s) 103a-103N across the firewall 102. Each one of the OPS(s) 103a-103N originates a corresponding outbound connection 116 (tunnel) across the firewall 102 such that the inbound service requests can be sent from the RCP server 104 to the OPS(s) 103a-103N through the outbound connection(s) 116 in a form that would otherwise be blocked by the firewall 102.

The RCP server 104 is to receive an inbound or incoming service request for a particular service from a user 105. As described herein, a user 105 may be a client, enterprise or organization having a computing device comprising processing resources to generate incoming service requests and to send the incoming service requests to other computing devices. As used herein, computing device may include network interface device(s) to communicate with other computing resource(s) (e.g., computing device(s)). As described herein, a computer network may include, for example, a local area network (LAN), a virtual LAN (VLAN), a wireless local area network (WLAN), a virtual private network (VPN), the Internet, or the like, or a combination thereof.

The RCP server 104 may comprise processing resources that may analyze a target Uniform Resource Locator (URL) that comprises a corresponding hostname, included in the incoming service request to determine the location of the requested service inside the firewall 102. In some other examples, the RCP server 104 may be previously configured with mapping rules of servers internal to the firewall 102, a FQDN pattern of the servers, a server list or a combination thereof, so the processing resources of the RCP server 104 may determine the OPS server to use to reach a requested service based on this configuration. The mapping rules of servers internal to the firewall 102 may include the addresses and identifiers of the remote servers 109-113 and the plurality of servers 101a-101N. The mapping rules may be to determine the OPS(s) 103a-103N and its port(s) that is to be used for a remote server 109-113 from the request. The FQDN pattern of the servers may comprise a list of domain labels representing the hierarchy from the lowest relevant level in the Domain Name System (DNS) to the top-level domain specifying the exact location of the servers 109-113 and the plurality of servers 101a-101 N. In this way, the mapping may be performed, by the RCP server, based on the FQDN pattern of the server (e.g. the request may include a FQDN pattern "*.example.com" that may match a "sv1.example.com" pattern of a particular server internal to the firewall), an IP-range pattern (e.g. the request may include the IP-range pattern "16.*" that may match a "16.1.2.3" IP address of a particular server internal to the firewall), or the server list.

The OPS(s) 103a-103N may comprise a connection generator engine to create the outbound connection(s) 116 with the RCP server 104 and a connection 117 with the request broker 115 of the respective remote servers 109-113. Each OPS 103a-103N may create a plurality of connections 117 with the corresponding request broker 115 of a plurality of remote servers 109-113. The number of connections 117 created by an OPS 103a-103N will depend on the incoming service requests received from the RCP server 104. A single remote server 109-113 may be connected with a plurality of OPS(s) 103a-103N through several connections 117.

As used herein, the connection generator engine may comprise any combination of hardware and programming to implement the functionalities of the connection generator engine described herein. In examples described herein, such combinations of hardware and programming may be implemented in a number of different ways. For example, the programming for engines may be processor executable instructions stored on at least one non-transitory machine-readable storage medium and the hardware for engines may include at least one processor to execute those instructions. In some examples, the at least one machine-readable storage medium may store instructions that, when executed by the at least one processing resource, at least partially implement the engine(s).

In some examples, the system 100 may comprise an OPS 103a-103N hosted in each one of a first number of servers 101a-101N internal to the firewall 102 and a second number of remote servers 109-113 internal to the firewall 102, where the first number of servers 101a-101N is less than the second number of remote servers 109-113. In this way, the number of outbound connections 116 across the firewall 102 can be limited by the number of OPS(s) 103a-103N existing in the system 100 that is less than the number of servers, including remote servers 109-113 and servers 101a-101N hosting the OPS(s) 103a-103N, inside the firewall 102. In some examples, the system 100 may comprise a plurality of RCP servers 104 and a plurality of OPSs 103a-103N connecting to different RCP servers 104.

In some other examples, each one of the servers 101a-101N may also comprise a plurality of respective services 108a-108N in which N represents an integer value greater than one, that are registered in the corresponding OPS(s) 103a-103N. If the requested service resides on a server 101a-101N, so the service 108a-108N can be directly reachable by the RCP server 104 through the outbound connection 116, the OPS(s) 103a-103N acts as a request broker sending the incoming service request to the corresponding service in the server 101a-101N itself.

When the RCP server 104 detects that the requested service is registered on a request broker 115 of a remote server 109-113, so the service 114a-114N is not directly reachable by the RCP server 104 through the outbound connection 116, the RCP server 104 may make a connect request to the OPS 103a-103N responsible of the requested service using the existing outbound connection 116, to create an end-to-end connection 117 to the request broker 115 on the particular remote server 109-113. This end-to-end connection 117 is then used to communicate and send data to the remote server 109-113 storing the requested service that resides behind the firewall 102 via the particular OPS 103a-103N. Once the connection 117 has been created, the OPS 103a-103N may forward the incoming service request to the particular service through the created connection 117. Then, the requested service may handle the received request and send a response to the user 105 via the end-to-end connection 117, the respective OPS 103a-103N, the outbound connection 116 and the RCP server 104.

According to the solution herein described, the OPS extends the RCP server approach with the ability to also accept requests that are not targeted to a local, registered service that is directly reachable through the created outbound connection, and forward the requests to the Request Broker on a remote server. In contrast to the local services that specifically register upfront with the request broker, this request forwarding does not involve a registration of the remote servers with the Request Broker.

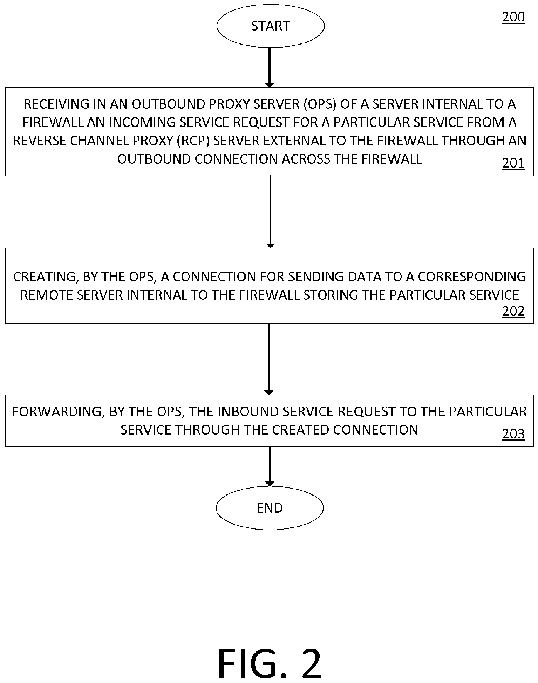

FIG. 2 is a flowchart of an example method 200 for forwarding an inbound service request from an OPS to a remote server internal to the firewall. Although execution of method 200 is described below with reference to computing device 100 of FIG. 1, other suitable systems for the execution of method 200 may be utilized. Additionally, implementation of method 200 is not limited to such examples.

The method 200 comprises block 201 for receiving in an OPS 103a-103N, for example OPS 103a, of a server 101a-101N internal to a firewall 102 an incoming service request for a particular service. The incoming service request is sent from a RCP server 104 external to the firewall 102 through an outbound connection 116 across the firewall 102 to the OPS 103a. The particular service 114a-114N is located in a remote server 109-113, for example remote server 111, internal to the firewall 102. In case the RCP server 104 is connected to more than one OPS 103a-103N, the RCP server 104 may determine that, for example, the OPS 103a is the responsible of the requested service. The RCP server 104 may determine that the OPS 103a is the responsible of the requested service based on a "server:port" identifier and a service name sourced in the request, a set of mapping rules of servers internal to the firewall with which the RCP server 104 may be previously configured. Determining the OPS 103a-103N responsible of a particular requested service further comprises determining the particular outbound connection 116 used to forward the incoming service request by the RCP server 104.

Then, the OPS 103a creates in block 202 a connection 107 with the remote server 111 internal to the firewall 102 storing the requested service and forwards in block 203 the incoming service request to the requested service through the created connection 117. The connection 117 may be an HTTP connection.

The RCP server 104, the OPS(s) 103a-103N and the remote servers 109-113 may comprise respective authentication engines to enable a two way certificate authentication for the outbound connections 116 and the connections 117, which provides additional security for the incoming data in the outbound environment. For additional security, to prevent that the outbound connection 116 could be used to route any inbound network traffic to any service inside the firewall 102, the request brokers may constrain that the request forwarding can go to services locally registered into the request broker and not to arbitrary services, and the OPS may also constrain that the request received form the RCP server can go to the locally registered services of the OPS itself, and not to arbitrary services. As used herein, the authentication engines may comprise any combination of hardware and programming to implement the functionalities of the authentication engines described herein.

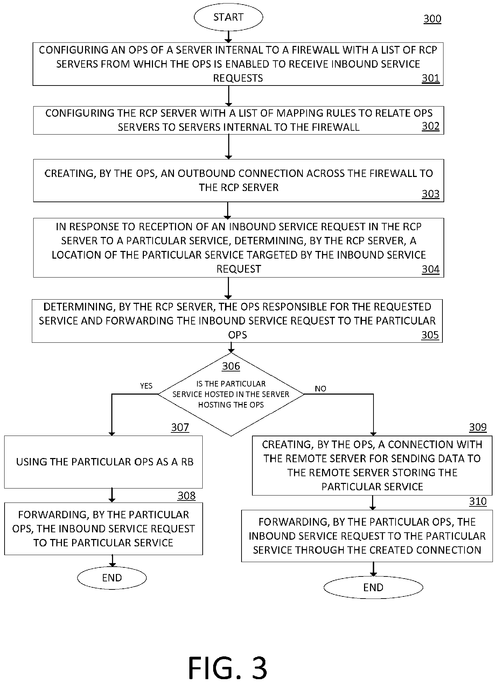

FIG. 3 is a flowchart of another example method 300 for forwarding an inbound service request from an OPS to a remote server internal to the firewall, including configuring the OPS. Although execution of method 300 is described below with reference to computing device 100 of FIG. 1, other suitable systems for the execution of method 300 may be utilized. Additionally, implementation of method 300 is not limited to such examples.

At block 301 of method 300, the OPS(s) 103a-103N of the servers 101 a-1 01 N internal to the firewall 102 can be configured with a respective list of RCP server(s) 104 from which each OPS 103a-103N can be enabled to receive incoming service requests. The list of RCP server(s) 104 from which each OPS 103a-103N can be enabled to receive incoming service requests may comprise hostnames of the RCP server(s) and the ports of the firewall 102 through which the outbound connection(s) 116 with the RCP server(s) 104 may be created. In some other examples, the configuration of the OPS(s) 103a-103N may be made by registering the corresponding RCP servers 104 to each particular OPS(s) 103a-103N. The registering of the RCP servers 104 into the OPS(s) 103a-103N may be performed by sending by the RCP server 104 to the OPS 103a-103N, with which an outbound connection is to be set, a setting indication a "server:port" identifier that configures the OPS 103a-103N to create a connection to the RCP server 104.

At block 302 of the method 300, the RCP server 104 can be configured with mapping rules of servers including remote servers 109-113 and the servers 101 a-1 01 N hosting the corresponding OPS(s) 103a-103N. These mapping rules may comprise IP address patterns, FQDN patterns, server lists or a combination thereof.

At block 303 of method 300, the OPS(s) 103a-103N can create a secure, for example an HTTP, outbound connection 116 to the RCP server 104 across the firewall 102. Through these outbound connections 116 the OPS(s) 103a-103N can receive incoming service requests from particular RCP server(s) 104 that were specified in the list received at block 301 of the method 300. These outbound connections 116 are kept open throughout the life of the process and may be used for setting up newer connections whenever the user 105 demands it. This outbound connections 116 might also add automatically entries in the mapping rules of servers that are configured at the RCP server and register the details of the servers the OPS(s) 103a-103N receive incoming service requests for.

Then, in response of reception of an inbound service request in the RCP server 104 for a particular service hosted in a server internal to the firewall 102, the RCP server can determine at block 304 the location of the server hosting the particular service targeted by the inbound service request inside the firewall 102. Based on the location of the service targeted by the inbound service request and the mapping rules of servers with which the RCP server 104 is configured at block 302 of the method 300, the RCP server determines at block 305 the OPS 103a-103N responsible of the service and then, determines the outbound connection 116 to use for forwarding the inbound service request. The RCP server 104 may determine the location of the service based in an URL contained in the request.

After that, the RCP server 104 determines at block 306, based on the location of the service targeted by the outbound service request whether the service is going to be locally processed when the service 108a-108N is located in a server 101 a-1 01 N storing an OPS 103a-103N or remotely processed when the service 114a-114N is located in a remote server 109-113. If the service 108a-108N is stored in a server 101a-101N hosting the OPS(s) 103a-103N, then the OPS 103a-103N acts as a request broker and forwards 308 the inbound service request to the corresponding service 108a-108N that is previously registered in the OPS 103a-103N. The service on the server 101a-101N handles the request and responds over the outbound connection 116 to the user 105.

If the service is hosted in a remote server 109-113 the RCP server 104 may send, through the respective outbound connection, an HTTP connect request to the OPS 103a-103N indicating that a HTTP connection with the remote server 109-113 storing the targeted serviced is to be created. Then, the OPS 103a creates at block 309 the HTTP connection 107 with the particular remote server 109-113 storing the requested service and forwards 203 the incoming service request to the requested service through the created connection 117. The connection 117 may be an HTTP connection. Then, the OPS 103a-103N forwards at block 310 the inbound service request to the corresponding service 108a-108N that can be previously registered in the particular remote server 109-113. The service 114a-114N on the remote server 109-113 handles the request and responds over the HTTP connection 117 and the outbound connection 116 to the user 105.

Two way certificate authentication can also be enabled for the outbound connections 116 and the connections 117. The OPS(s) 103a-103N may also constrain that the request forwarding can go to registered services of a request broker in the remote server or to the registered service of the OPS itself, and not to arbitrary services.

In some examples, functionalities described herein in relation to FIG. 3 may be provided in combination with functionalities described herein in relation to any of FIG. 2.

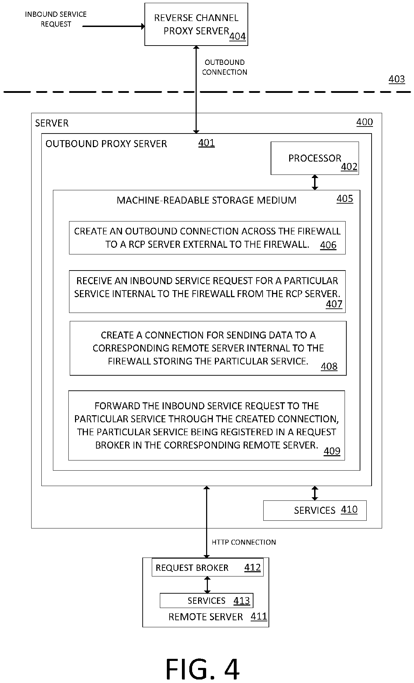

FIG. 4 shows a block diagram of an example system for forwarding inbound service requests from an OPS of a server internal to the firewall to a remote server storing the requested service inside the firewall, in which a machine-readable storage medium 405 stores instructions to be executed by a processor 402. The system depicted in FIG. 4 may include additional components and that some of the components described herein may be removed or modified without departing from a scope of the system 400. This example does not intend to be limiting.

The server 400 internal to the firewall 403 hosts an outbound proxy server (OPS) 401 that in turn hosts the processor 402 and the machine-readable storage medium 405. The server 400 may also store a plurality or services 410 that may be registered in the OPS 401. The OPS 401 communicates with the reverse channel proxy (RCP) server 404 external to the firewall 403 via an outbound connection created with the OPS 401. The OPS also communicates with remote servers 411 inside the firewall 403 via HTTP connections created by the OPS 401. Each one of the remote servers 411 comprises a request broker 412 to communicate with the OPS 401 and a plurality of services 413 registered in the request broker 412.

The processor 402 executes the instructions 406-409 to create 406 an outbound connection across the firewall 403 to a RCP server 404 external to the firewall 403, wherein the firewall 403 is to enable entities internal to the firewall 403 to originate connections across the firewall 403 to entities external to the firewall 403 but to block connections originating from entities external to the firewall 403. The processor 402 also executes instructions to receive 407 an incoming service request for a particular service 413 internal to the firewall 403 from the RCP server 404, create 408 a connection, for example an HTTP connection, for sending data to a corresponding remote server 411 internal to the firewall 403 storing the particular service 413. The processor 402 also executes instructions to forward the incoming service request to the particular service 413 through the created connection, the particular service being registered in a request broker 412 in the corresponding remote server 411.

The machine-readable storage medium 405 may be any electronic, magnetic, optical, or other physical storage device that contains or stores executable instructions. Thus, the machine-readable storage medium 405 may be, for example, Random Access Memory (RAM), a storage device, an optical disc, and the like. The machine-readable storage medium 405 may be a non-transitory machine-readable storage medium, where the term "non-transitory" does not encompass transitory propagating signals.

As used herein, the "processor" may be any type of electronic circuitry within a computing device that carries out the instructions of a computer program by performing basic arithmetic, logical, control and input/output (I/O) operations specified by the instructions, wherein these instruction may be embodied in code. The "processor" may include, for example, a central processing unit (CPU), a semiconductor-based microprocessor, an application specific integrated circuit (ASIC), a graphical processing unit (GPU), or other hardware device suitable for retrieval and execution of instructions stored in a machine-readable storage medium.

In some examples, functionalities described herein in relation to FIG. 4 may be provided in combination with functionalities described herein in relation to any of FIGS. 1, 2 and 3.

The solution herein described achieves many technical effects, including providing a mechanism to connect software providers and consumers in an outbound setup that may be relevant in SaaS or Service Provider deployments. The solution also assures that the communication is always outbound and avoids modifications in the firewall configuration, the opening of the firewall ports and the setup of DMZs, increasing the security of the network. The OPS is a scalable solution since the deployment of one OPS can allow communication with multiple providers in an outbound setup. Moreover, the HTTPS communication between the OPS and the remote servers internal to the firewall, with two way authentication, ensures data security and integrity.

Other technical effects of the examples herein described include that for every incoming request for the outbound environment, two way certificate authentication done between the user external to the firewall and the OPS and the OPS and the remote servers internal to the firewall. The solution may also help to scale the consumer server communication with optimal number of open connections, as a consumer does not have to open a connection to each and every server over the internet. Besides, the OPS shows the same performance as of any proxy solution used in the enterprise environment. In contrast to other approaches, the solution can handle a much higher number or target servers by proxying to end-point servers, and a good level of security by brokering to registered end-point services at a Request Broker.

In the foregoing description, numerous details are set forth to provide an understanding of the subject disclosed herein. However, implementations may be practiced without some or all of these details. Other implementations may include modifications and variations from the details discussed above. It is intended that the appended claims cover such modifications and variations.

## Claims

1. A method comprising:
receiving in an Outbound Proxy Server (OPS) of a server internal to a firewall an inbound service request for a particular service from a Reverse Channel Proxy (RCP) server external to the firewall through an outbound connection across the firewall, wherein the firewall is to enable entities internal to the firewall to originate connections across the firewall to entities external to the firewall and to block connections originating from entities external to the firewall and wherein the particular service is internal to the firewall;
creating, by the OPS, a connection for sending data to a corresponding remote server internal to the firewall storing the particular service; and
forwarding, by the OPS, the inbound service request to the particular service through the created connection.

2. The method of claim 1, comprising creating, by the OPS, the outbound connection to the RCP server across the firewall.

3. The method of claim 1, wherein creating, by the OPS, a connection for sending data to a corresponding remote server internal to the firewall is performed when a location of the particular service is in a remote server not directly reachable from the RCP server through the outbound connection.

4. The method of claim 1, comprising configuring the RCP server with a list of mapping rules to relate OPS servers to servers internal to the firewall, the rules being based on an IP-range pattern, a Fully Qualified Domain Name (FQDN) server name pattern, a list of servers internal to the firewall, or a combination thereof.

5. The method of claim 4, comprising:
determining, by the RCP server, a location of the particular service targeted by the inbound service request based on a server name and a service name included in the inbound service request; and
determining, by the RCP server, the OPS to send the inbound service request based on the location of the particular service and the mapping rules.

6. The method of claim 1, further comprises, when the particular service is hosted in the server hosting the OPS and the particular service is registered on the OPS, forwarding, by the OPS, the inbound service request to the particular service.

7. The method of claim 1, comprising configuring the OPS with a list of RCP servers from which the OPS is enabled to receive the inbound service requests.

8. The method of claim 1, wherein the outbound connection and the connection created by the OPS with the remote servers are HTTP connections.

9. The method of claim 8, comprising enabling a two-way certificate authentication on the HTTP connections.

10. The method of claim 1, wherein forwarding, by the OPS, the inbound service request to the particular service through the created connection comprise forwarding the inbound service request to services previously registered in a request broker in the corresponding remote server.

11. A computing system comprising:
an Outbound Proxy Server (OPS) hosted in a server internal to the firewall, wherein the firewall is to enable entities internal to the firewall to originate connections across the firewall to entities external to the firewall and to block connections originating from entities external to the firewall; and
wherein, the OPS is to create an outbound connection across the firewall between the OPS and a Reverse Channel Proxy (RCP) server external to the firewall, to receive an inbound service request for a particular service from the RCP server through the outbound connection, to create a connection for sending data to a corresponding remote server internal to the firewall storing the particular service; and to forward the inbound service request to the particular service through the created connection.

12. The computing system of claim 12, wherein the OPS comprises connection generator engine to create an outbound connection with at least one RCP server and a connection with at least one remote server.

13. The computing system of claim 12, comprising an OPS hosted in each one of a first number of servers internal to the firewall and a second number of remote servers internal to the firewall, where the first number is less than the second number.

14. The computing system of claim 12, wherein the remote server comprises a request broker and a plurality of services hosted in the remote server and registered in the request broker, and the request broker is to receive the inbound service request from the OPS.

15. A non-transitory machine-readable storage medium comprising instructions executable by a processor of an Outbound Proxy Server (OPS) of a server internal to a firewall to:
to create an outbound connection across the firewall to a Reverse Channel Proxy (RCP) server external to the firewall, wherein the firewall is to enable entities internal to the firewall to originate connections across the firewall to entities external to the firewall but to block connections originating from entities external to the firewall; and
receive an inbound service request for a particular service internal to the firewall from the RCP server;
create a connection for sending data to a corresponding remote server internal to the firewall storing the particular service; and
forward the inbound service request to the particular service through the created connection, the particular service being registered in a request broker in the corresponding remote server.
